# EUROPÄISCHE PATENTSCHRIFT

(11) **EP 1 131 217 B1**
(45) Veröffentlichungstag und Bekanntmachung des Hinweises auf die Patenterteilung: **04.06.2003**
(21) Anmeldenummer: 00972567.2
(22) Anmeldetag: 25.08.2000
(51) Int. Cl.: B60G 15/14, F16F 9/38, F16B 7/04

(54) **LUFTFEDERANORDNUNG**
PNEUMATIC SPRING ARRANGEMENT
ENSEMBLE AMORTISSEUR PNEUMATIQUE

(30) Priorität: 17.09.1999 DE 19944587
(43) Veröffentlichungstag der Anmeldung: 12.09.2001
(73) Patentinhaber: Phoenix AG, 21079 Hamburg (DE)
(72) Erfinder: GÖTZ, Harald, 21149 Hamburg (DE); MÜLLER, Jan, 22305 Hamburg (DE)
(86) Internationale Anmeldenummer: DE0002923
(87) Internationale Veröffentlichungsnummer: WO01021421

(56) Entgegenhaltungen:
- DE-A- 3 843 549
- DE-A- 19 753 637
- FR-A- 2 770 883

## Beschreibung

Die Erfindung betrifft eine Luftfederanordnung gemäß Oberbegriff des Patentanspruches 1.

Eine gattungsgemäße Luftfederanordnung mit Luftfederdeckel, Luftfederkolben und Luftfederbalg als wesentliche Bauteile des Luftfedermoduls ist beispielsweise in der Druckschrift DE-A-197 53 637 (Fig. 1) beschrieben, und zwar unter Verwendung eines Schwingungsdämpfers (Stoßdämpfers), eines Rucksackmoduls und einer Schutzmanschette, wobei diese Zusatzbauteile im folgenden näher vorgestellt werden.

Der Schwingungsdämpfer umfaßt ein Behälterrohr und eine Kolbenstange, die fest mit dem Kernbereich des Luftfederdeckels verbunden ist und gleitend in das Behälterrohr eintaucht. Häufig ist der Schwingungsdämpfer mit einem Rucksackmodul versehen, insbesondere in Form eines ADS-Moduls (Adaptive Damping System), das seitlich über die äußere Peripherie des Endbereiches des Luftfederkolbens hinausragt. Diesbezüglich wird ergänzend auf die Druckschrift DE-A-198 26 480 (Fig. 1) verwiesen.

Die schlauchförmige Schutzmanschette umfaßt einen faltenförmigen Mittenteil sowie einen ersten und zweiten Anschlußbereich, wo auch die Befestigung mit den entsprechenden Luftfederbauteilen erfolgt. Bei dem Ausführungsbeispiel gemäß DE-A-197 53 637 (Fig. 1) ist dabei der erste Anschlußbereich mit dem Luftfederdeckel verbunden, während der zweite Anschlußbereich am Endbereich des Luftfederkolbens befestigt ist.

Bei den bisherigen Luftfederanordnungen läßt sich die Schutzmanschette in Serienausführung nur vor der Schwingungsdämpfermontage montieren, da ihr zweiter Anschlußbereich im Innendurchmesser zu eng ist, um über das Rucksackmodul (ADS-Modul) aufgeschoben werden zu können, während ihr erster Anschlußbereich diesbezüglich zumeist einen ausreichenden Innendurchmesser besitzt.

Die Aufgabe der Erfindung besteht nun darin, eine Reparaturmanschette bereitzustellen, und zwar unter Berücksichtigung der Tatsache, daß der Schwingungsdämpfer für eine Reparatur nicht immer von dem Luftfedermodul getrennt werden kann. Darüber hinaus soll die Schutzmanschette auch als Serienmanschette einsetzbar sein.

Gelöst wird diese Aufgabe gemäß Kennzeichen des Patentanspruches 1 dadurch, daß
- die Innendurchmesser des ersten und zweiten Anschlußbereiches der Schutzmanschette so groß sind, daß die Schutzmanschette über das Rucksackmodul aufschiebbar ist; wobei
- der überschüssige Freiraum innerhalb des zweiten Anschlußbereiches der Schutzmanschette mit einem Adapterelement ausgleichend füllbar ist, wobei das Adapterelement mittels eines Verschlußsystems zu einem ringförmigen Gebilde schließbar ist und dabei den Endbereich des Luftfederkolbens und/oder das Behälterrohr umgreift.

Zweckmäßige Ausgestaltungen der Erfindung sind in den Patentansprüchen 2 bis 14 genannt.

Die Erfindung wird nun anhand von Ausführungsbeispielen unter Bezugnahme auf schematische Zeichnungen erläutert. Es zeigen:
- Fig. 1: eine Luftfederanordnung mit einer Schutzmanschette gemäß dem Stand der Technik;
- Fig. 2: eine Luftfederanordnung mit einer erfindungsgemäßen Schutzmanschette;
- Fig. 3: eine Detaildarstellung der Schutzmanschette gemäß Fig. 2;
- Fig. 4: ein vorteilhaftes Adapterelement für eine Schutzmanschette gemäß Fig. 3;
- Fig. 5: ein weiteres Ausführungsbeispiel einer erfindungsgemäßen Schutzmanschette;
- Fig. 6: ein vorteilhaftes Adapterelement für eine Schutzmanschette gemäß Fig. 5.

In Verbindung mit diesen Figuren gilt folgende Bezugsziffernliste:
- **1**: Luftfederanordnung
- **2**: Luftfederdeckel (Druckbehälter mit Ventil)
- **3**: Luftfederkolben (Abrollkolben, Tauchkolben)
- **4**: Stirnbereich des Luftfederkolbens
- **5**: Abrollfläche des Luftfederkolbens
- **6**: Endbereich des Luftfederkolbens
- **7**: Luftfederbalg aus elastomerem Werkstoff
- **8**: Rollfalte des Luftfederbaiges
- **9**: Luftfederinnenraum
- **10**: Außenführung
- **11**: Schwingungsdämpfer
- **12**: Behälterrohr
- **13**: Kolbenstange
- **14**: Rucksackmodul (ADS-Modul)
- **15**: Schutzmanschette
- **16**: Kolbenaufnahme
- **17**: Schutzmanschette
- **18**: Adapterelement (Adapterbuchse)
- **19**: Überhang des zweiten Anschlußbereiches
- **20**: dünnwandiges Buchsenteil mit Filmscharnier
- **21**: dickwandiges Buchsenteil mit Verschlußsystem
- **22**: Verschlußsystem
- **23**: Labyrinthsystem
- **24**: Schutzmanschette
- **25**: Adapterelement (Adapterbuchse)
- **26**: Halbschale (Halbbuchse)
- **27**: Halbschale (Halbbuchse)
- **28**: Verschlußsystem
- **29**: Labyrinthsystem
- **A**: faltenförmiger Mittenteil der Schutzmanschette (rotationssymmetrisch)
- **A'**: faltenförmiger Mittenteil der Schutzmanschette (rotationssymmetrisch)
- **A"**: faltenförmiger Mittenteil der Schutzmanschette (nicht rotationssymmetrisch)
- **B**: erster Anschlußbereich der Schutzmanschette (rotationssymmetrisch)
- **B'**: zweiter Anschlußbereich der Schutzmanschette (nicht rotationssymmetrisch)
- **D**: maximaler Außendurchmesser des Behälterrohres des Schwingungsdämpfers im Bereich des Rucksackmoduls (ADS-Moduls)
- **D1**: Innendurchmesser des ersten Anschlußbereiches der Schutzmanschette
- **D2**: Innendurchmesser des zweiten Anschlußbereiches der Schutzmanschette
- **X**: Spiegelebene
- **Y**: Spiegelebene
- **Z**: Mittenachse

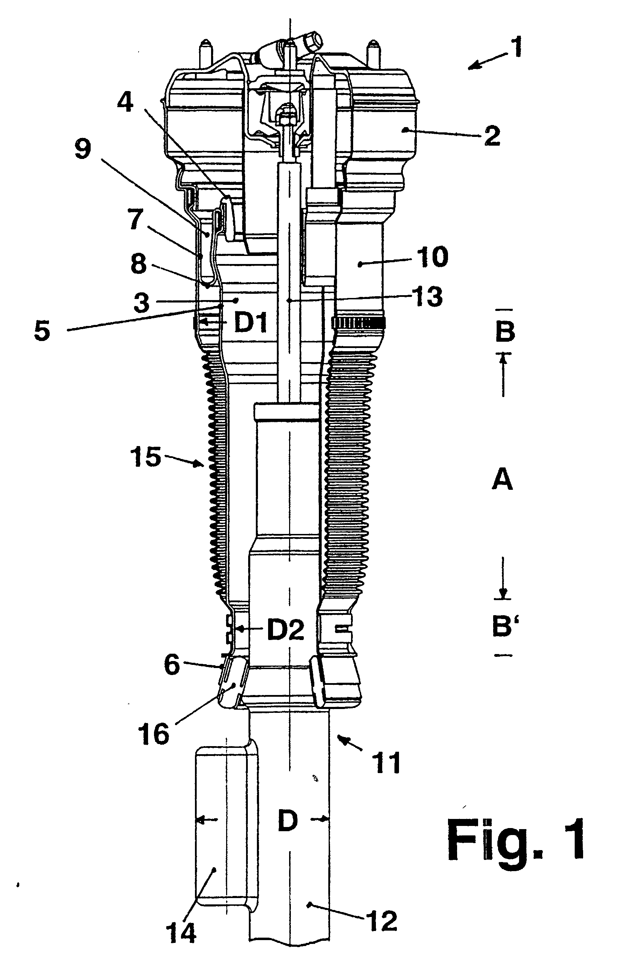

Fig. 1 zeigt eine Luftfederanordnung **1** für eine Kfz-Vorderachse. Die wesentlichen Bauteile des Luftfedermoduls sind der topfförmige Luftfederdeckel **2**, der Luftfederkolben **3**, dessen Stirnbereich **4** dem Luftfederdeckel gegenüberliegend angeordnet ist, sowie der Luftfederbalg **7**. Der Luftfederbalg verbindet dabei den Luftfederdeckel und Luftfederkolben unter Verwendung von Befestigungsmitteln (z.B. Klemmringe), und zwar unter Umschließung eines volumenelastischen Luftfederinnenraumes **9**. Beim Einfedern des Luftfederbalges bildet sich eine Rollfalte **8**, die an der Abrollfläche **5** des Luftfederkolbens abrollen kann.

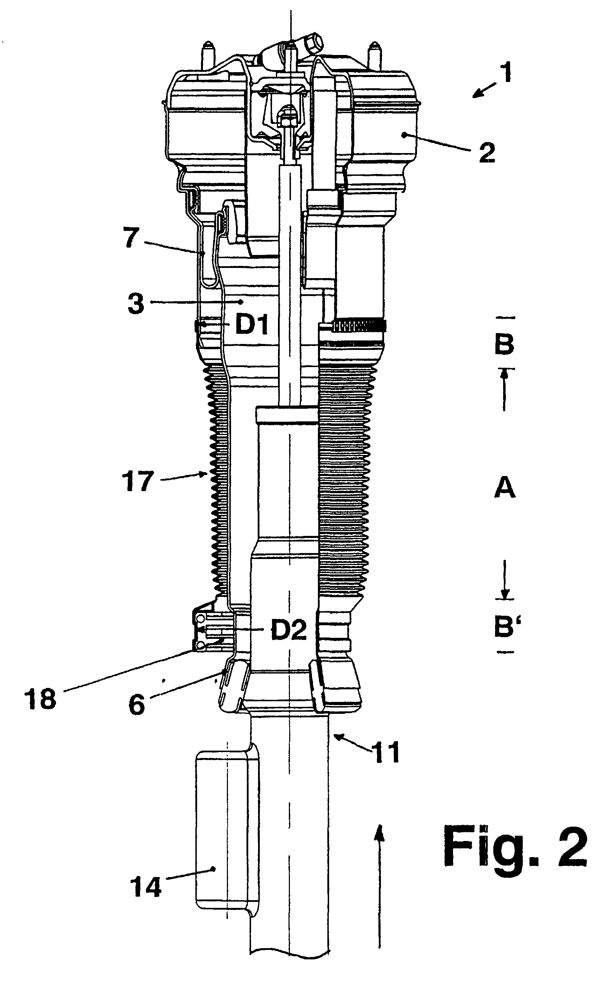

Der Luftfederbalg **7** ist zumeist mit einem eingebetteten Festigkeitsträger in Form eines Axialbalges (DE-A-36 43 073; Fig. 1) oder Kreuzlagenbalges (DE-A-29 04 522; Fig. 2) versehen. Bei der Luftfederanordnung **1** wird ein Axialbalg verwendet, der mit einer Außenführung **10** ausgestattet ist.

Ferner weist die Luftfederanordnung **1** einen Schwingungsdämpfer **11** auf, der ein Behälterrohr **12** und eine Kolbenstange **13** umfaßt. Die Kolbenstange ist dabei fest mit dem Kernbereich des Luftfederdeckels **2** verbunden und taucht gleitend in das Behälterrohr ein. Ein Rucksackmodul **14** in Form eines ADS-Moduls ragt über die äußere Peripherie des Endbereiches **6** des Luftfederkolbens **3** hinaus, und zwar unter Bildung eines maximale Außendurchmessers **D** des Behälterrohres.

Weiterhin ist die Luftfederanordnung **1** mit einer schlauchförmigen Schutzmanschette **15** aus einem elastomeren Werkstoff, thermoplastischen Elastomeren (TPE) oder einem thermoplastischen Kunststoff ausgestattet. Die Schutzmanschette umfaßt dabei einen faltenförmigen Mittenteil **A**, einen ersten Anschlußbereich **B** mit einem Innendurchmesser **D1** und einen zweiten Anschlußbereich **B'** mit einem Innendurchmesser **D2**. Der erste Anschlußbereich **B** ist an der Außenseite des unteren Endes der Außenführung **10** mittels einer Schelle befestigt. Der zweite Anschlußbereich **B'**, der sich zwischen dem Rucksackmodul **14** und dem ersten Anschlußbereich **B** befindet, ist mit dem Endbereich **6** des Luftfederkolbens **3** verbunden, und zwar bei direktem Kontakt mit dem Luftfederkolben, wobei die Befestigung, beispielsweise mit einer Schelle, innerhalb einer Kolbenverjüngung erfolgt. Die Schutzmanschette hat die Aufgabe zu verhindern, daß Verunreinigungen in den dynamischen Bereich des Luftfederbalges **7** gelangen.

Der Endbereich **6** des Luftfederkolbens **3** sitzt auf einer Kolbenaufnahme **16** auf, die zugleich eine dichtende Verbindung zwischen dem Luftfederkolben und dem Behälterrohr **12** des Schwingungsdämpfers **11** bildet. Bedingt durch eine andere Konstruktion im Endbereich des Luftfederkolbens, beispielsweise in Form eines einheitlichen Bauteiles von Luftfederkolben und Behälterrohr, kann der zweite Anschlußbereich **B'** der Schutzmanschette **15** auch am Behälterrohr oder im Übergangsbereich von Luftfederkolben und Behälterrohr befestigt sein.

Wird nun bei der Luftfederanordnung **1** die Schutzmanschette **15** als Serienmanschette beschädigt, so läßt sich zwar diese mit Hilfe eines Schneidwerkzeuges, beispielsweise mit einem "Cutter-Messer", aufschneiden und entfernen, jedoch nicht durch Aufscheiben einer Reparaturmanschette ersetzen, da der Innendurchmeser **D2** des zweiten Anschlußbereiches **B'** der Schutzmanschette kleiner ist als der maximale Außendurchmesser **D** des Behälterrohres **12** im Bereich des ADS-Moduls **14**. Der Innendurchmesser **D1** des ersten Anschlußbereiches **B** der Schutzmanschette reicht dagegen zumeist aus. Man müßte also das Luftfedermodul vom Schwingungsdämpfer trennen, um die Reparaturmanschette anbringen zu können. Dabei muß festgehalten werden, daß eine Trennung nicht immer so ohne weiteres möglich ist.

Fig. 2 zeigt nun eine Luftfederanordnung **1** mit dem gleichen Bauprinzip. Was sich gegenüber der Luftfederanordnung gemäß Fig. 1 geändert hat, ist die Schutzmanschette **17**, und zwar ausschließlich innerhalb ihres zweiten Anschlußbereiches **B'**. Der Innendurchmesser **D2** des Anschlußbereiches **B'** ist nun so groß, daß die Schutzmanschette als Reparaturmanschette über das ADS-Modul **14** in Pfeilrichtung aufschiebbar ist. Das bauliche Hindernis kann somit problemlos überwunden werden.

Da sich an der Außenkontur des Endbereiches **6** des Luftfederkolbens **3** nichts geändert hat, entsteht ein überschüssiger Freiraum, da der zweite Anschlußbereich **B'** der Schutzmanschette **17** nicht mehr direkt mit dem Luftfederkolben in Verbindung steht. Der überschüssige Freiraum wird nun mit einem Adapterelement **18** ausgefüllt. Die verdrehsichere Verklemmung selbst erfolgt auch hier wie bei der Luftfederanordnung gemäß Fig. 1 mittels einer Schelle.

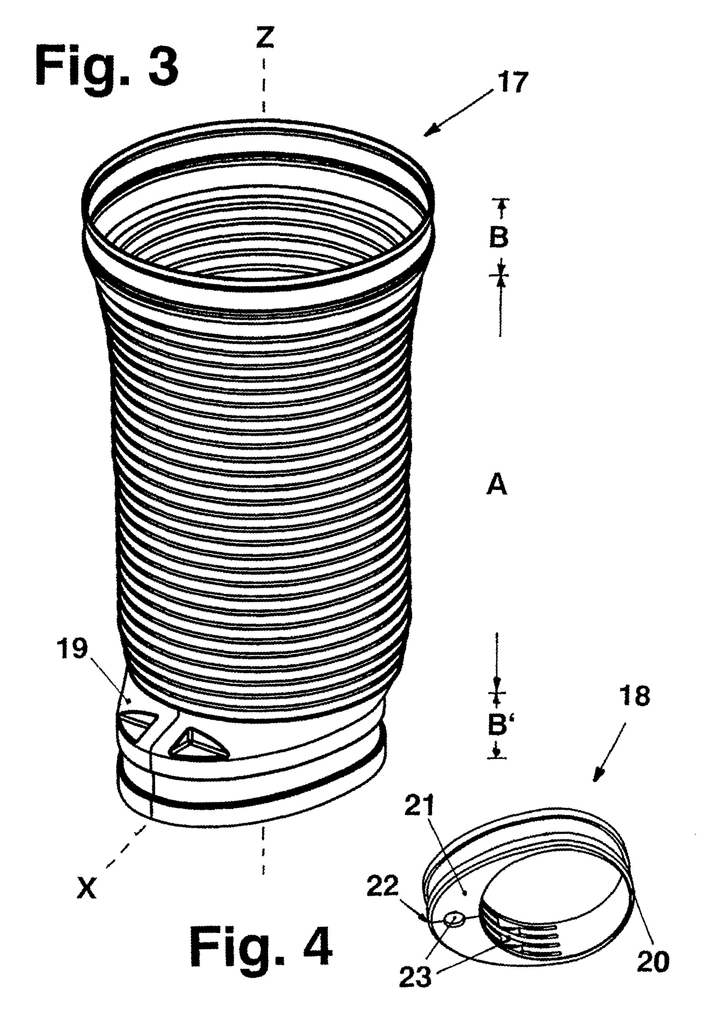

Fig. 3 zeigt nochmals Details der Schutzmanschette **17** gemäß Fig. 2. Der erste Anschlußbereich **B** und der faltenförmige Mittenteil A sind im wesentlichen roationssymmetrisch ausgebildet, und zwar bezogen auf die Mittenachse **Z**. Der zweite Anschlußbereich **B'** ist dagegen nicht mit einer Rotationssymmetrieachse versehen. Bezogen auf die Umfangsrichtung weist sie einen im wesentlichen ellipsenförmigen Verlauf auf, und zwar unter Bildung eines maximalen Innendurchmessers **D2** (Fig. 2). Dabei ist der zweite Anschlußbereich **B'** exzentrisch seitlich unter Ausbildung eines Überhanges **19** ausgewuchtet, und zwar derart, daß nur eine Spiegelebene **X** vorhanden ist.

Fig. 4 zeigt ein vorteilhaftes Adapterelement **18** für den zweiten Anschlußbereich **B'** der Schutzmanschette **17** gemäß Fig. 3. Das buchsenförmige Adapterelement, vorzugsweise aus Kunststoff oder elastomerem Werkstoff (Gummiformteil), ist hier ein Einzelbauteil, und zwar in Form eines dünnwandigen Buchsenteiles **20** mit Filmscharnier und eines dickwandigen Buchsenteiles **21**, wo sich das Verschlußsystem **22** befindet, mit dessen Hilfe ein ringförmiges Gebilde herstellbar ist, beispielsweise mittels eines Einrastmechanismus. Ferner ist das Adapterelement innenseitig mit einem Labyrinthsystem **23** versehen, das für einen Luftstromausgleich sorgt.

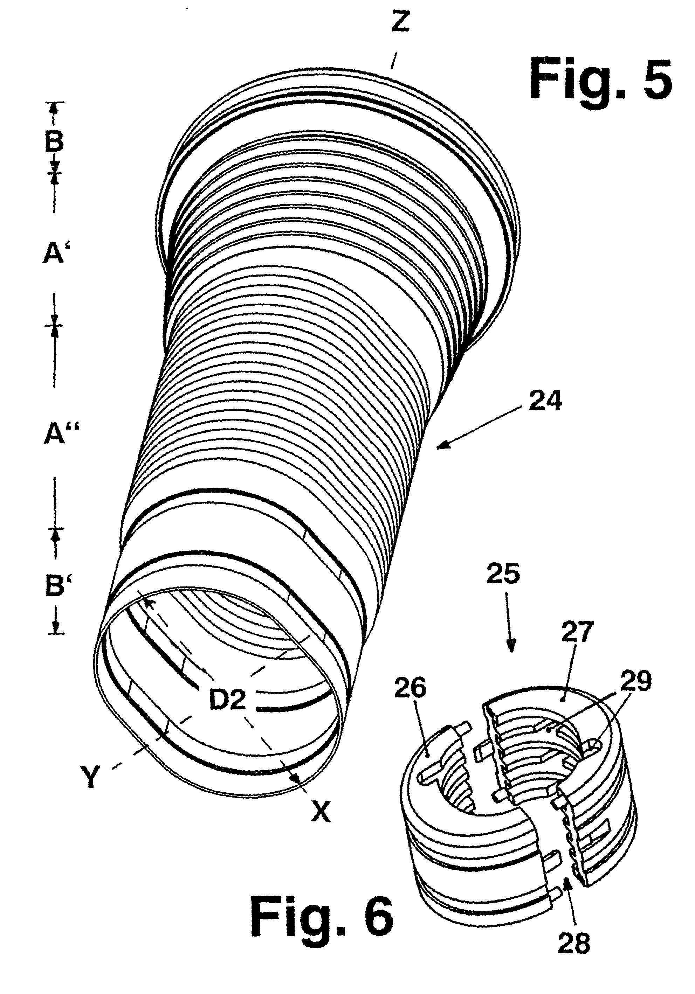

Fig. 5 zeigt eine Schutzmanschette **24** für eine Kfz-Hinterachse. Der erste Anschlußbereich **B** und der sich anschließende Mittenteil **A'**, in dessen Bereich das Abrollen des Luftfederbalges stattfindet, sind auch hier im wesentlichen rotationsymmetrisch ausgebildet, und zwar bezogen auf die Mittenachse **Z**. Der auswuchtungsfreie Anschlußbereich **B'** ohne Überhang wie auch der sich hier anschließende Mittenteil **A"** sind dagegen nicht mit einer Rotationssymmetrieachse versehen. Bezogen auf die Umfangsrichtung weisen die beiden Manschettenbereiche **A"** und **B'** einen im wesentlichen ovalförmigen Verlauf auf, und zwar unter Bildung eines maximalen Innendurchmessers **D2** bei zwei Spiegelebenen **X** und **Y**. Auch eine derartige Konstruktion der Schutzmanschette ist über das ADS-Modul **14** (Fig. 2) in Pfleilrichtung aufschiebbar.

Fig. 6 zeigt nun ein vorteilhaftes Adapterelement **25** für den zweiten Anschlußbereich **B'** der Schutzmanschette **24** gemäß Fig. 5. Das buchsenförmige Adapterelement besteht hier aus zwei gleichen Halbschalen **26** und **27** aus Kunststoff, elastomerem Werkstoff (Gummiformteil) oder Metall, die mittels eines Verschlußsystems **28** zu einem ringförmigen Gebilde zusammensteckbar sind, und zwar mittels Stecknoppen und Rasterarmen. Das Adapterelement ist ferner mit einem Labyrinthsystem **29** versehen, das für einen Luftstromausgleich sorgt.

Die Schutzmanschetten **17** (Fig. 2, 3) und **24** (Fig. 5) sind sowohl als Reparaturmanschetten als auch als Serienmanschetten einsetzbar.

## Patentansprüche

1. Luftfederanordnung (1), bestehend aus wenigstens folgenden Bauteilen, nämlich:
- einem Luftfederdeckel (2), der zumeist topfförmig ausgebildet ist;
- einem Luftfederkolben (3), umfassend
• einen Stirnbereich (4), der dem Luftfederdeckel (2) gegenüberliegend angeordnet ist;
• eine seitliche Abrollfläche (5) und
• einen Endbereich (6), der dem Stirnbereich (4) am weitesten entfernt ist;
- einem Luftfederbalg (7) aus elastomerem Werkstoff, der
• den Luftfederdeckel (2) und Luftfederkolben (3) unter Verwendung von Befestigungsmitteln miteinander verbindet und dabei einen volumenelastischen Luftfederinnenraum (9) umschließt, wobei der Luftfederbalg unter Bildung einer Rollfalte (8) an der Abrollfläche (5) des Luftfederkolbens (3) abrollen kann; wobei ferner
• der Luftfederbalg zumeist mit einem eingebetteten Festigkeitsträger in Form eines Axial- oder Kreuzlagenbalges versehen ist, wobei bei Verwendung eines Axialbalges vorzugsweise eine Außenführung (10) vorhanden ist;
- einem Schwingungsdämpfer (11), umfassend
• ein Behälterrohr (12) und
• eine Kolbenstange (13), die fest mit dem Kernbereich des Luftfederdeckel (2) verbunden ist und gleitend in das Behälterrohr eintaucht;
- wenigstens einem Rucksackmodul (14), das
• seitlich über die äußere Peripherie des Endbereiches (6) des Luftfederkolbens (3) hinausragt, insbesondere
• in Form eines ADS-Modules, das in Verbindung mit dem Schwingungsdämpfer (11) seitlich am Behälterrohr (12) angeordnet ist, und zwar unter Bildung eines maximalen Außendurchmessers (D) des Behälterrohres;
- einer schlauchförmigen Schutzmanschette (15, 17, 24), umfassend
• einen faltenförmigen Mittenteil (A, A', A");
• einen ersten Anschlußbereich (B) mit einem Innendurchmesser (D1), der nicht mit dem Luftfederkolben (3) oder dem Schwingungsdämpfer (11) verbunden ist, sondern beispielsweise am Luftfederdeckel (2) oder an der Außenführung (10) befestigt ist; sowie
• einen zweiten Anschlußbereich (B') mit einem weiteren Innendurchmesser (D2), der unter Verwendung von Befestigungsmitteln mit dem Endbereich (6) des Luftfederkolbens (3) und/oder mit dem Behälterrohr (12) des Schwingungsdämpfers (11) in Verbindung steht, wobei sich der zweite Anschlußbereich (B') zwischen dem Rucksackmodul (14) und dem ersten Anschlußbereich (B) befindet;
**dadurch gekennzeichnet, daß**
- die Innendurchmesser (D1, D2) des ersten Anschlußbereiches (B) und zweiten Anschlußbereiches (B') der Schutzmanschette (17, 24) so groß sind, daß die Schutzmanschette über das Rucksackmodul (14) aufschiebbar ist; wobei
- der überschüssige Freiraum innerhalb des zweiten Anschlußbereiches (B') der Schutzmanschette (17, 24) mit einem Adapterelement (18, 25) ausgleichend füllbar ist, wobei das Adapterelement mittels eines Verschlußsystems (22, 28) zu einem ringförmigen Gebilde schließbar ist und dabei den Endbereich (6) des Luftfederkolbens (3) und/oder das Behälterrohr (12) umgreift.

2. Luftfederanordnung nach Anspruch 1, **dadurch gekennzeichnet, daß** der erste Anschlußbereich (B) der Schutzmanschette (17, 24) im wesentlichen rotationssymmetrisch ist, und zwar bezogen auf die Mittenachse (Z).

3. Luftfederanordnung nach Anspruch 1 oder 2, **dadurch gekennzeichnet, daß** der zweite Anschlußbereich (B') der Schutzmanschette (17, 24) nicht rotationssymmetrisch ist, und zwar bezogen auf die Mittenachse (Z).

4. Luftfederanordnung nach Anspruch 3, **dadurch gekennzeichnet, daß** der zweite Anschlußbereich (B') der Schutzmanschette (17, 24) bezogen auf die Umfangsrichtung einen im wesentlichen elipsen- oder ovalförmigen Verlauf aufweist, und zwar unter Bildung eines maximalen Innendurchmesser (D2).

5. Luftfederanordnung nach Anspruch 4, **dadurch gekennzeichnet, daß** der zweite Anschlußbereich (B') der Schutzmanschette (17) exzentrisch seitlich unter Ausbildung eines Überhanges (19) ausgewuchtet ist, insbesondere derart, daß maximal nur eine Spiegelebene (X) vorhanden ist.

6. Luftfederanordnung nach Anspruch 4, **dadurch gekennzeichnet, daß** der zweite Anschlußbereich (B') der Schutzmanschette (24) auswuchtungsfrei zwei Spiegelebenen (X, Y) aufweist.

7. Luftfederanordnung nach einem der Ansprüche 1 bis 6, **dadurch gekennzeichnet, daß** der gesamte Mittenteil (A) der Schutzmanschette (17) im wesentlichen rotationssymmetrisch ist, und zwar bezogen auf die Mittenachse (Z).

8. Luftfederanordnung nach einem der Ansprüche 1 bis 6, **dadurch gekennzeichnet, daß** der Mittelteil (A') der Schutzmanschette (24), der dem ersten Anschlußbereich (B) zugewandt ist, im wesentlichen rotationssymmetrisch ist, und zwar bezogen auf die Mittenachse (Z), während der Mittenteil (A") der Schutzmanschette, der dem zweiten Anschlußbereich (B') zugewandt ist, einen im wesentlichen Ellipsen- oder ovalförmigen Umfangsverlauf aufweist, insbesondere in Verbindung mit zwei Spiegelebenen (X, Y).

9. Luftfederanordnung nach einem der Ansprüche 1 bis 8, **dadurch gekennzeichnet, daß** das Adapterelement (18) ein Einzelbauteil ist, und zwar in Form eines dünnwandigen Buchsenteiles (20) mit Filmscharnier und eines dickwandigen Buchsenteiles (21), wo sich das Verschlußsystem (22) befindet, mit dessen Hilfe ein ringförmiges Gebilde herstellbar ist.

10. Luftfederanordnung nach einem der Ansprüche 1 bis 8, **dadurch gekennzeichnet, daß** das Adapterelement (25) aus zwei Halbschalen (26, 27) besteht, die mittels eines Verschlußsystems (28) zu einem ringförmigen Gebilde zusammensteckbar sind.

11. Luftfederanordnung nach einem der Ansprüche 1 bis 10, **dadurch gekennzeichnet, daß** das Adapterelement innenseitig (18, 25) mit einem Labyrinthsystem (23, 29) versehen ist, das für einen Luftstromausgleich sorgt.

12. Luftfederanordnung nach einem der Ansprüche 1 bis 11, **dadurch gekennzeichnet, daß** das Adapterelement (18, 25) aus Kunststoff besteht.

13. Luftfederanordnung nach einem der Ansprüche 1 bis 11, **dadurch gekennzeichnet, daß** das Adapterelement (25) aus elastomerem Werkstoff besteht.

14. Luftfederanordnung nach einem der Ansprüche 1 bis 13, **dadurch gekennzeichnet, daß** das Adapterelement (25) aus Metall besteht.

## Claims

1. Air spring arrangement (1), consisting of at least the following components, namely:
- an air spring cover (2), which is usually pot-shaped;
- an air spring piston (3), comprising
. a front region (4), which is arranged lying opposite the air spring cover (2);
. a lateral rolling surface (5) and
. an end region (6), which is furthest away from the front region (4);
- an air spring bellows (7) which is made of elastomer material and which
. connects the air spring cover (2) and the air spring piston (3) to one another using fastening means and in the process encloses an air spring inner chamber (9) of flexible volume, the air spring bellows being able to roll over the rolling surface (5) of the air spring piston (3) forming a rolling pleat (8);
. further the air spring bellows usually being provided with an embedded strength member in the form of an axial or transverse layer bellows, preferably with an external guide (10) when an axial bellows is used;
- a vibration damper (11), comprising
. a reservoir tube (12) and
. a piston rod (13) which is firmly connected to the core region of the air spring cover (2) and is inserted slidingly in the reservoir tube;
- at least one piggyback module (14), which
. projects laterally beyond the external periphery of the end region (6) of the air spring piston (3), in particular
. in the form of an ADS module, which is arranged on the side of the reservoir tube (12) in conjunction with the vibration damper (11), forming a maximum outside diameter (D) of the reservoir tube;
- a tubular protective gaiter (15, 17, 24), comprising
. a pleated middle part (A, A', A");
. a first connecting region (B) with an inside diameter (D1), which is not connected to the air spring piston (3) or the vibration damper (11), but is fastened for example to the air spring cover (2) or to the external guide (10), and
. a second connecting region (B') with a further inside diameter (D2), which is in communication with the end region (6) of the air spring piston (3) and/or with the reservoir tube (12) of the vibration damper (11) using fastening means, the second connecting region (B') being located between the piggyback module (14) and the first connecting region (B);
**characterised in that**
- the inside diameters (D1, D2) of the first connecting region (B) and the second connecting region (B') of the protective gaiter (17, 24) are so large that the protective gaiter can be slid over the piggyback module (14),
- the surplus free space inside the second connecting region (B') of the protective gaiter (17, 24) being fillable by way of compensation with an adapter element (18, 25), the adapter element being closable by means of a closing system (22, 28) to form a ring-shaped structure and in the process engaging around the end region (6) of the air spring piston (3) and/or the reservoir tube (12).

2. Air spring arrangement according to claim 1, **characterised in that** the first connecting region (B) of the protective gaiter (17, 24) is essentially rotationally symmetrical, related to the centre axis (Z) .

3. Air spring arrangement according to claim 1 or 2, **characterised in that** the second connecting region (B') of the protective gaiter (17, 24) is not rotationally symmetrical, related to the centre axis (Z) .

4. Air spring arrangement according to claim 3, **characterised in that** the second connecting region (B') of the protective gaiter (17, 24) related to the circumferential direction exhibits an essentially elliptical or oval shaped pattern, forming a maximum inside diameter (D2).

5. Air spring arrangement according to claim 4, **characterised in that** the second connecting region (B') of the protective gaiter (17) is balanced eccentrically to the side forming an overhang (19), in particular such that a maximum of only one mirror plane (X) is present.

6. Air spring arrangement according to claim 4, **characterised in that** the second connecting region (B') of the protective gaiter (24) exhibits two mirror planes (X, Y) without being balanced.

7. Air spring arrangement according to one of claims 1 to 6, **characterised in that** the entire middle part (A) of the protective gaiter (17) is essentially rotationally symmetrical, related to the centre axis (Z) .

8. Air spring arrangement according to one of claims 1 to 6, **characterised in that** the middle part (A') of the protective gaiter (24) which faces the first connecting region (B) is essentially rotationally symmetrical, related to the centre axis (Z), whereas the middle part (A") of the protective gaiter facing the second connecting region (B') exhibits an essentially elliptical or oval shaped periphery, in particular in conjunction with two mirror planes (X, Y).

9. Air spring arrangement according to one of claims 1 to 8, **characterised in that** the adapter element (18) is an individual component in the form of a thin-walled bush part (20) with a film hinge and a thick-walled bush part (21) where the closing system (22) is located with the aid of which a ring-shaped structure can be produced.

10. Air spring arrangement according to one of claims 1 to 8, **characterised in that** the adapter element (25) consists of two half shells (26, 27), which can be assembled together by means of a closing system (28) to form a ring-shaped structure.

11. Air spring arrangement according to one of claims 1 to 10, **characterised in that** on the inside the adapter element (18, 25) is provided with a labyrinth system (23, 29) which ensures air flow compensation.

12. Air spring arrangement according to one of claims 1 to 11, **characterised in that** the adapter element (18, 25) is made of plastic.

13. Air spring arrangement according to one of claims 1 to 11, **characterised in that** the adapter element (25) is made of elastomer material.

14. Air spring arrangement according to one of claims 1 to 13, **characterised in that** the adapter element (25) is made of metal.

## Revendications

1. Ensemble amortisseur pneumatique (1) formé d'au moins les composants suivants, précisément :
- un couvercle de ressort pneumatique (2) réalisé majoritairement en forme de pot ;
- un piston de ressort pneumatique (3), comprenant
• une zone frontale (4) disposée en regard d'un couvercle de ressort pneumatique (2) ;
• une surface de déroulement (5) latérale, et
• une zone d'extrémité (6), d'éloignement maximal par rapport à la zone frontale (4);
- un soufflet de ressort pneumatique (7) en matériau élastomère, qui
• relie ensemble le couvercle de ressort pneumatique (2) et le piston de ressort pneumatique (3) en utilisant des moyens de fixation et entoure alors un espace intérieur de ressort pneumatique (9) à élasticité volumique, le soufflet de ressort pneumatique pouvant se dérouler sur la surface de roulement (5) du piston de ressort pneumatique (3) en formant un pli roulant (8) ; où en outre
• le soufflet de ressort pneumatique est muni majoritairement d'un support de résistance incorporé, réalisé à la forme d'un soufflet à couches axiales ou croisées, un guidage extérieur (10) étant prévu de préférence en cas d'utilisation d'un soufflet axial ;
- un amortisseur de vibration (11), comprenant
• un tube formant réservoir (12), et
• une tige de piston (13), reliée rigidement à la zone centrale du couvercle de ressort pneumatique (2) et pénétrant avec coulissement dans le tube formant réservoir ;
- au moins un module rapporté (14), qui
• ressort latéralement de la périphérie extérieure de la zone d'extrémité (6) du piston de ressort pneumatique (3), en particulier
• sous la forme d'un module ADS, disposé en liaison avec l'amortisseur de vibration (11), latéralement sur le tube formant réservoir (12) et, précisément, en formant un diamètre extérieur (D) maximal pour le tube formant réservoir ;
- une manchette de protection (15, 17, 24) en forme de tuyau comprenant
• une partie médiane (A, A', A") en forme de plis ;
• une première zone de raccordement (B) ayant un diamètre intérieur (D1) non relié au piston de ressort pneumatique (3) ou à l'amortisseur de vibration (11), mais, par exemple, fixé sur le couvercle de ressort pneumatique (2), ou bien sur le guidage extérieur (10) ; ainsi qu'
• une deuxième zone de raccordement (B') avec un deuxième diamètre intérieur (D2), relié à la zone d'extrémité (6) du piston de ressort pneumatique (3) et/ou au tube formant réservoir (12) de l'amortisseur de vibration (11) en utilisant des moyens de fixation, la deuxième zone de raccordement (B') se trouvant entre le module rapporté (14) et la première zone de raccordement (B) ;
**caractérisé en ce que**
- le diamètre intérieur (D1, D2), de la première zone de raccordement (B) et de la deuxième zone de raccordement (B') de la manchette de protection (17, 24), sont tels que la manchette de protection peut être enfilée en passant sur le module rapporté (14) ; où
- l'excès d'espace libre à l'intérieur de la deuxième zone de raccordement (B') de la manchette de protection (17, 24) peut être rempli, dans un but d'équilibrage, d'un élément adaptateur (18, 24), sachant que l'élément adaptateur peut être fermé au moyen d'un système obturateur (22, 28) pour donner une structure annulaire et entoure alors la zone d'extrémité (6) du piston de ressort pneumatique (3) et/ou du tube formant réservoir (12).

2. Dispositif amortisseur pneumatique selon la revendication 1, **caractérisé en ce que** la première zone de raccordement (B) de la manchette de protection (17, 24) répond sensiblement à une symétrie de rotation et, précisément, par rapport à l'axe médian (Z).

3. Dispositif amortisseur pneumatique selon la revendication 1 ou 2, **caractérisé en ce que** la deuxième zone de raccordement (B') de la manchette de protection (17, 24) ne répond pas à une symétrie de rotation et, précisément, par rapport à l'axe médian (Z).

4. Dispositif amortisseur pneumatique selon la revendication 3, **caractérisé en ce que** la deuxième zone de raccordement (B') de la manchette de protection (17, 24) par rapport à la direction périphérique présente une allure sensiblement en forme d'ellipse ou d'ovale et, précisément, en formant un diamètre intérieur (D2) maximal.

5. Dispositif amortisseur pneumatique selon la revendication 4, **caractérisé en ce que** la deuxième zone de raccordement (B') de la manchette de protection (17) est en déport excentriquement latéralement en formant un surplomb (19), en particulier de manière à n'avoir qu'un plan de symétrie spéculaire (X).

6. Dispositif amortisseur pneumatique selon la revendication 4, **caractérisé en ce que** la deuxième zone de raccordement (B') de la manchette de protection (24) présente deux plans de symétrie spéculaire (X, Y), sans aucun déséquilibre.

7. Dispositif amortisseur pneumatique selon l'une des revendications 1 à 6, **caractérisé en ce que** l'ensemble de la partie médiane (A) de la manchette de protection (17) répond sensiblement à une symétrie de rotation et, précisément, en se référant à l'axe médian (Z).

8. Dispositif amortisseur pneumatique selon l'une des revendications 1 à 6, **caractérisé en ce que** la partie médiane (A') de la manchette de protection (24), tournée vers la première zone de raccordement (B), répond sensiblement à une symétrie de rotation, précisément par rapport à l'axe médian (Z), tandis que la partie médiane (A") de la manchette de protection tournée vers la deuxième zone de raccordement (B') présente une allure périphérique sensiblement elliptique ou ovale, en particulier en liaison avec deux plans de symétrie spéculaire (X, Y).

9. Dispositif amortisseur pneumatique selon l'une des revendications 1 à 8, **caractérisé en ce que** l'élément adaptateur (18) est un composant individuel, précisément sous la forme d'une partie de douille (20) à paroi mince avec un film-charnière et une partie de douille (21) à paroi épaisse, où se trouve l'élément de fermeture (22) à l'aide duquel on peut produire une structure en forme d'anneau.

10. Dispositif amortisseur pneumatique selon l'une des revendications 1 à 8, **caractérisé en ce que** l'élément adaptateur (25) est formé de deux demi-coques (26, 27), pouvant être enfichées ensemble pour former une structure en forme d'anneau, à l'aide d'un système de fermeture (28).

11. Dispositif amortisseur pneumatique selon l'une des revendications 1 à 10, **caractérisé en ce que** l'élément adaptateur est muni intérieurement (18, 25) d'un système à labyrinthe (23, 29) veillant à équilibrer l'écoulement d'air.

12. Dispositif amortisseur pneumatique selon l'une des revendications 1 à 11, **caractérisé en ce que** l'élément adaptateur (18, 25) est en matière synthétique.

13. Dispositif amortisseur pneumatique selon l'une des revendications 1 à 11, **caractérisé en ce que** l'élément adaptateur (25) est en matériau élastomère.

14. Dispositif amortisseur pneumatique selon l'une des revendications 1 à 13, **caractérisé en ce que** l'élément adaptateur (25) est en métal.
